# EUROPEAN PATENT APPLICATION

(11) **EP 4 309 890 A1**
(43) Date of publication of application: **24.01.2024**
(21) Application number: 22771573.7
(22) Date of filing: 22.03.2022
(51) Int. Cl.: B32B 9/00, B32B 9/04, B32B 17/06, C03C 17/23, B32B 3/30, G02B 1/113, G02B 1/14

(54) **COVER MEMBER**

(30) Priority: 19.03.2021 JP 2021046687
(71) Applicant: NIPPON SHEET GLASS COMPANY, LIMITED, Tokyo 108-6321 (JP)
(72) Inventor: IWAI, Nobuki, Tokyo 108-6321 (JP)
(74) Representative: Hasegawa, Kan
(86) International application number: PCT/JP2022/013314
(87) International publication number: WO 2022/196834

(57) **Abstract**

A cover member according to the present invention is a cover member configured to cover a display device, and includes a glass plate having a first surface and a second surface, and a single functional film formed on the first surface. The functional film includes an inorganic oxide that forms three-dimensional network bonds, inorganic oxide microparticles containing the same element as the inorganic oxide, and antibacterial metal ions. Protrusions and depressions are formed on a surface of the functional film by the inorganic oxide microparticles.

## Description

### Technical Field

The present invention relates to a cover member configured to cover an article while allowing the article to be externally seen therethrough, and a method for producing the cover member.

### Background Art

Display devices such as displays are provided with cover members, and the cover members protect the display devices. Such cover members are required to have an antireflection function in order to make the display devices easier to see. A glass plate with such an antireflection function is disclosed in Patent Literature 1, for example.

### Citation List

### Patent Literature

Patent Literature 1: WO 2008/81837

### Summary of Invention

### Technical Problem

On the other hand, in recent years, there has been increasing demand for cover members having antibacterial performance. However, no cover member has yet been proposed that has both an antireflection function and antibacterial performance. The present invention was made to address this problem, and it is an object thereof to provide a cover member that has both an antireflection function and antibacterial performance, and a method for producing the cover member.

### Solution to Problem

Item 1: A cover member configured to cover an article while allowing the article to be externally seen therethrough, the cover member including:
a glass plate having a first surface and a second surface; and
a single functional film formed on the first surface,
wherein the functional film includes:
   an inorganic oxide that forms three-dimensional network bonds;
   inorganic oxide microparticles containing the same element as the inorganic oxide; and
   antibacterial metal ions, and
protrusions and depressions are formed on a surface of the functional film by the inorganic oxide microparticles.

Item 2: The cover member according to item 1, wherein the functional film has a refractive index of 1.3 to 1.48.

Item 3: The cover member according to item 1 or 2, wherein the functional film has a reflectance of 3% or less at 550 nm.

Item 4: The cover member according to any one of items 1 to 3, wherein the functional film has a specular gloss of 90% to 140%.

Item 5: The cover member according to any one of items 1 to 4, wherein, in an L*a*b* color system, a* of a color tone of reflection from the functional film has a value of -2 to +2, and
in the L*a*b* color system, b* of the color tone of reflection from the functional film has a value of -2 to +2.

Item 6: The cover member according to any one of items 1 to 5, wherein the metal ions are copper ions.

Item 7: The cover member according to any one of items 1 to 6, wherein the functional layer has a film thickness of 50 to 500 nm.

Item 8: A method for producing a cover member, the method including:
forming a coating solution in which inorganic microparticles and antibacterial metal ions are added to a silicon alkoxide;
applying the coating solution to a glass plate; and
heating the glass plate to which the coating solution has been applied.

### Advantageous Effects of Invention

According to the present invention, it is possible to provide a cover member that has both an antireflection function and antibacterial performance.

### Brief Description of Drawings

FIG. 1 is a cross-sectional view showing an embodiment of a cover member according to the present invention.
FIG. 2 is an enlarged cross-sectional view of the cover member shown in FIG.1.
FIG. 3 shows surface characteristics of a functional film of Example 1.

### Description of Embodiments

Hereinafter, an embodiment of a cover member according to the present invention will be described with reference to the drawings. A cover member according to the present embodiment is used to cover an article and is configured to allow the article to be externally seen through the cover member itself. The term "article" encompasses common displays and also various devices such as mobile PCs, tablet PCs, in-vehicle devices such as car navigation systems, devices at least partially having display functions based on electronic components, and display devices that do not have an electronic display function but are used to display something to the outside. Furthermore, the term "article" also encompasses items that are not devices, for example, something to show to the outside like commodities. In this case, the cover member of the present invention can be used as, for example, a portion of a showcase.

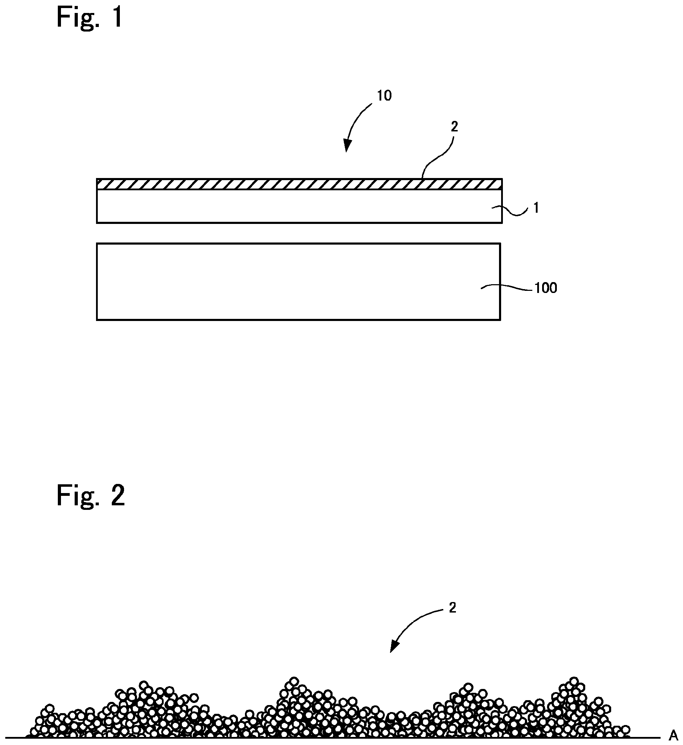

FIG.1 is a cross-sectional view of a cover member. As shown in FIG.1, a cover member 10 according to the present embodiment includes a glass plate 1 having a first surface and a second surface, and a functional film 2 deposited on the first surface of the glass plate 1. The cover member 10 is disposed covering a display device 100 that has been described above. In this case, the glass plate 1 is disposed with its second surface facing the display device 100, and the functional film 2 is disposed facing outward. A more detailed description will be given below.

### 1. Glass Plate

The glass plate 1 can be made of general-purpose soda-lime glass, borosilicate glass, aluminosilicate glass, alkali-free glass, or other types of glass, for example. Moreover, the glass plate 1 can be formed using a float process. This production process makes it possible to obtain a glass plate 1 having a flat and smooth surface. However, the glass plate 10 may have protrusions and depressions on its main surface, and may be made of figured glass, for example. Figured glass can be formed using a process called a roll out process. Figured glass that is formed using this production process usually has periodic protrusions and depressions in one direction along the main surface of the glass plate.

In the float process, molten glass is continuously supplied onto a molten metal such as molten tin, and the supplied molten glass is made to flow over the molten metal and thereby formed into a strip-like shape. The thus formed glass is called a "glass ribbon".

The glass ribbon is cooled as it moves downstream, and the cooled and solidified glass ribbon is raised from the molten metal by rollers. Then, the glass ribbon is transported to an annealing lehr by rollers, annealed, and then cut. In this manner, a float glass plate can be obtained.

The thickness of the glass plate 1 is not particularly limited, but a thin glass plate is better for weight reduction, and the thickness of the glass plate 1 is preferably 0.3 to 5 mm, and more preferably 0.6 to 2.5 mm, for example. The reason for this is that, if the glass plate 10 is excessively thin, the strength is reduced, while if the glass plate 1 is excessively thick, the member 100 to be protected may be distorted when seen through the cover member 10.

The glass plate 1 typically may be a flat plate, but may also be a bent plate. In particular, in the case where the member to be protected has a non-flat surface shape such as a curved surface, the glass plate 1 preferably has a main surface with a non-flat surface shape that fits the non-flat surface shape of the member to be protected. In this case, the entire glass plate 1 may be bent so as to have a certain curvature, or the glass plate 1 may be locally bent. The main surface of the glass plate 1 may be constituted by, for example, a plurality of flat surfaces being connected via a curved surface. The radius of curvature of the glass plate 1 can be 5,000 mm or less, for example. The lower limit value of this radius of curvature can be 10 mm or more, for example, but a locally bent portion, in particular, may have an even smaller radius of curvature, which can be 1 mm or more, for example.

It is also possible to use a glass plate having the following composition. Hereinafter, unless otherwise specified, "%" as used when indicating the amounts of components of the glass plate 1 means "mol%" in all instances. Moreover, as used herein, the wording "substantially composed of" means that the total content of listed components accounts for 99.5 mass% or more, preferably 99.9 mass% or more, and more preferably 99.95 mass% or more. The wording "substantially does not contain" means that the content of the component in question is 0.1 mass% or less, and preferably 0.05 mass% or less.

Based on the composition (hereinafter also referred to as "SL in the narrow sense", or simply as "SL") of float plate glass, which is widely used as a composition of glass that is suitable for producing a glass plate using the float process, the inventor of the present invention has conducted a study to find a composition with which chemical strengthening properties of the SL in the narrow sense can be improved, while enabling T₂, T₄, and other characteristics to approximate as closely as possible to those of the SL in the narrow sense, within a composition range that is considered by a person skilled in the art to be soda lime silicate glass (hereinafter also referred to as "SL in the broad sense") that is suitable for the float process, or more specifically, within the following mass% range:
SiO₂: 65% to 80%
Al₂O₃: 0% to 16%
MgO: 0% to 20%
CaO: 0% to 20%
Na₂O: 10% to 20%
K₂O: 0% to 5%

Hereinafter, components included in the glass composition of the glass plate 1 will be described.

### SiO₂

SiO₂ is a main component constituting the glass plate 1. An excessively low SiO₂ content results in a decrease in chemical durability, such as water resistance, and heat resistance of glass. On the other hand, an excessively high SiO₂ content results in an increase in the viscosity of the glass plate 1 at high temperatures, making it difficult to melt and form the glass plate 1. Therefore, an appropriate range of the SiO₂ content is 66 to 72 mol%, and preferably 67 to 70 mol%.

### Al₂O₃

Al₂O₃ is a component for improving the chemical durability, such as water resistance, of the glass plate 1 and furthermore facilitating the movement of alkali metal ions in the glass, thereby increasing the surface compressive stress after chemical strengthening and increasing the depth of the stress layer. On the other hand, an excessively high Al₂O₃ content results in an increase in the viscosity of the glass melt, thereby increasing T₂ and T₄ and degrading the clarity of the glass melt, and consequently, making it difficult to produce a high-quality glass plate.

Therefore, an appropriate range of the Al₂O₃ content is 1 to 12 mol%. The Al₂O₃ content is preferably 10 mol% or less and preferably 2 mol% or more.

### MgO

MgO is an essential component that improves the meltability of glass. In order to sufficiently achieve this effect, it is preferable that MgO is added to this glass plate 1. Furthermore, if the MgO content is less than 8 mol%, the surface compressive stress after chemical strengthening decreases, and the depth of the stress layer is thus likely to be small. On the other hand, if the MgO content is increased to more than a suitable amount, strengthening performance that is obtained through chemical strengthening degrades; in particular, the depth of the surface compressive stress layer drastically decreases. Although this adverse effect of MgO is the smallest compared with those of all the other alkaline earth metal oxides, the MgO content in this glass plate 1 is 15 mol% or less. Furthermore, a high MgO content increases T₂ and T₄ and degrades the clarity of this glass melt, thereby making it difficult to produce a high-quality glass plate.

Therefore, the MgO content in this glass plate 1 is within a range of 1 to 15 mol%, and preferably 8 mol% or more and 12 mol% or less.

### CaO

CaO has the effect of reducing the viscosity at high temperatures; however, an extremely high CaO content that exceeds a suitable range is likely to devitrify the glass plate 1 and inhibits the movement of sodium ions in the glass plate 1. In the case where CaO is not contained, the surface compressive stress after chemical strengthening is likely to decrease. On the other hand, if CaO is contained in an amount of more than 8 mol%, the surface compressive stress after chemical strengthening markedly decreases, the depth of the compressive stress layer markedly decreases, and the glass plate 1 is likely to be devitrified.

Therefore, an appropriate range of the CaO content is 1 to 8 mol%. The CaO content is preferably 7 mol% or less and preferably 3 mol% or more.

### SrO, BaO

SrO and BaO significantly reduce the viscosity of the glass plate 1, and when contained in a small amount, SrO and BaO more markedly have the effect of reducing the liquid phase temperature T_{L} than CaO. However, even when added in a very small amount, SrO and BaO markedly hinder the movement of sodium ions in the glass plate 1, significantly reduce the surface compressive stress, and considerably reduce the depth of the compressive stress layer.

Therefore, it is preferable that this glass plate 1 substantially does not contain SrO and BaO.

### Na₂O

Na₂O is a component for increasing the surface compressive stress and increasing the depth of the surface compressive stress layer, due to sodium ions being replaced by potassium ions. However, if the Na₂O content is increased to more than a suitable amount, stress relaxation during chemical strengthening treatment surpasses generation of the surface compressive stress due to ion exchange during chemical strengthening treatment, and as a result, the surface compressive stress is likely to decrease.

Also, while Na₂O is a component for improving meltability and reducing T₄ and T₂, an excessively high Na₂O content results in a significant decrease in water resistance of the glass. If the Na₂O content in the glass plate 1 is 10 mol% or more, a sufficient effect of reducing T₄ and T₂ can be obtained, and if the Na₂O content is more than 16 mol%, the surface compressive stress markedly decreases due to the stress relaxation.

Therefore, an appropriate range of the Na₂O content in the glass plate 1 of the present embodiment is 10 to 16 mol%. The Na₂O content is preferably 12 mol% or more, and more preferably 15 mol% or less.

### K₂O

K₂O, like Na₂O, is a component that improves the meltability of glass. Also, in a low K₂O content range, the ion exchange rate during chemical strengthening increases, and the depth of the surface compressive stress layer thus increases, while, on the other hand, the liquid phase temperature T_{L} of the glass plate 1 decreases. Therefore, it is preferable that K₂O is contained in a small amount.

On the other hand, although the effect of reducing T₄ and T₂ of K₂O is smaller than that of Na₂O, a high K₂O content inhibits clarification of the glass melt. Furthermore, the higher the K₂O content, the lower the surface compressive stress after the chemical strengthening. Therefore, an appropriate range of the K₂O content is 0 to 1 mol%.

### Li₂O

Li₂O, when contained even in a small amount, significantly reduces the depth of the compressive stress layer. Also, in the case where a glass article containing Li₂O is chemically strengthened in a molten salt of potassium nitrate alone, the molten salt deteriorates significantly faster than in the case of a glass article that does not contain Li₂O. Specifically, in the case where the glass articles are repeatedly chemically strengthened using the same molten salt, surface compressive stress generated in the glass surface of the glass article containing Li₂O decreases in the fewer cycles. Therefore, although the glass plate 1 of the present embodiment may contain Li₂O in an amount of 1 mol% or less, it is preferred that the glass plate 1 substantially does not contain Li₂O.

### B₂O₃

B₂O₃ is a component that lowers the viscosity of the glass plate 1 and improves meltability. However, if the B₂O₃ content is excessively high, phase separation is likely to occur in the glass plate 1, resulting in a decrease in the water resistance of the glass plate 1. Also, a compound formed of B₂O₃ and an alkali metal oxide may volatilize and cause damage to a refractory material of a glass melting chamber. Furthermore, if B₂O₃ is contained, the depth of the compressive stress layer formed by chemical strengthening becomes smaller. Therefore, an appropriate B₂O₃ content is 0.5 mol% or less. In the present invention, it is more preferable that the glass plate 1 substantially does not contain B₂O₃.

### Fe₂O₃

Usually, Fe is present as Fe²⁺ or Fe³⁺ in glass, and functions as a colorant. Fe³⁺ is a component that improves the ultraviolet absorption performance of glass, and Fe²⁺ is a component that improves heat absorption performance. In the case where the glass plate 1 is to be used as a cover glass for a display, its coloration is required to be inconspicuous, and therefore, a lower Fe content is preferred. However, Fe from industrial raw materials is often inevitably mixed in glass. Therefore, the content of iron oxide in terms of Fe₂O₃ is preferably 0.15 mass% or less, more preferably 0.1 mass% or less, and even more preferably 0.02 mass% or less, where the glass plate 1 as a whole is taken as 100 mass%.

### TiO₂

TiO₂ is a component that reduces the viscosity of the glass plate 1 and also increases the surface compressive stress generated by chemical strengthening, but TiO₂ may add a yellow color to the glass plate 1. Therefore, an appropriate TiO₂ content is 0 to 0.2 mass%. Furthermore, TiO₂ from commonly used industrial raw materials is inevitably mixed in the glass plate 1 and thus may be contained therein in an amount of approximately 0.05 mass%. With a content like this, TiO₂ does not add any color to glass and may be contained in the glass plate 1 of the present embodiment.

### ZrO₂

Especially when producing a glass plate using the float process, ZrO₂ may be mixed in the glass plate 1 from refractory bricks constituting a glass melting furnace, and the ZrO₂ content in that case is known to be approximately 0.01 mass%. On the other hand, ZrO₂ is a component that improves the water resistance of glass and increases the surface compressive stress generated by chemical strengthening. However, a high ZrO₂ content may cause an increase in working temperature T₄ and a sharp increase in liquid phase temperature T_{L} and, in the production of a glass plate using the float process, makes it likely that crystals containing precipitated Zr remain in the produced glass as foreign matter. Therefore, an appropriate ZrO₂ content is 0 to 0.1 mass%.

### SO₃

In the float process, a sulfate such as sodium sulfate (Na₂SO₄) is widely used as a clarifying agent. The sulfate decomposes in the molten glass and generates a gas component, and thus, degassing of the glass melt is promoted, but a portion of the gas component dissolves and remains in the glass plate 1 as SO₃. It is preferable that the SO₃ content in the glass plate 1 of the present invention is 0 to 0.3 mass%.

### CeO₂

CeO₂ is used as a clarifying agent. CeO₂ produces O₂ gas in the molten glass, and therefore, CeO₂ contributes to degassing. On the other hand, an excessively high CeO₂ content causes the glass to be colored yellow. Therefore, the CeO₂ content is preferably 0 to 0.5 mass%, more preferably 0 to 0.3 mass%, and even more preferably 0 to 0.1 mass%.

### SnO₂

It is known that, in a glass plate that is formed using the float process, tin from a tin bath has diffused into a surface that has been in contact with the tin bath during the formation of the glass plate, and the diffused tin is present as SnO₂. Also, SnO₂ mixed with glass raw materials contributes to degassing. It is preferable that the SnO₂ content in the glass plate 1 of the present invention is 0 to 0.3 mass%.

### Other Components

It is preferable that the glass plate 1 according to the present embodiment is substantially composed of the above-listed components. However, the glass plate 1 according to the present embodiment may also contain components other than the above-listed components as long as the content of each such component is preferably less than 0.1 mass%.

Examples of the components that can be contained include As₂O₅, Sb₂O₅, Cl, and F that may be added for the purpose of degassing the molten glass in addition to SO₂ and SnO₂ described above. However, it is preferable that As₂O₅, Sb₂O₅, Cl, and F are not added because of their significant adverse effects on the environment and for other reasons. Other examples of the components that can be contained are ZnO, P₂O₅, GeO₂, Ga₂O₃, Y₂O₃, and La₂O₃. Components other than the above that are derived from industrially used raw materials can also be contained as long as the content of each such component does not exceed 0.1 mass%. Since these components may be appropriately added as necessary, or inevitably mixed in, it is possible that the glass plate 1 of the present embodiment substantially does not contain these components.

### Density (Specific Gravity): d

With the above-described composition, the density of the glass plate 1 according to the present embodiment can be reduced to 2.53 g·cm⁻³ or less, or 2.51 g·cm⁻³ or less, or even to 2.50 g·cm⁻³ or less in certain cases.

In the float process or the like, if there is a significant difference in density between product types of glass, the molten glass having the higher density may stagnate in a bottom portion of the melting furnace when changing the product type of glass that is produced, and therefore, the product type cannot be changed smoothly. The density of soda-lime glass that is currently mass-produced using the float process is approximately 2.50 g·cm⁻³. For this reason, in the context of mass production using the float process, it is preferable that the density of the glass plate 1 is close to the aforementioned value, or specifically is 2.45 to 2.55 g·cm⁻³, more preferably 2.47 to 2.53 g·cm⁻³, and even more preferably 2.47 to 2.50 g·cm⁻³.

### Elasticity: E

A glass substrate may be warped when subjected to chemical strengthening that involves ion exchange. In order to prevent the warpage, it is preferable that the glass plate 1 has a high elasticity. According to the present invention, the elasticity (Young's modulus: E) of the glass plate 1 can be increased to 70 GPa or more, or even to 72 GPa or more.

Hereinafter, chemical strengthening of the glass plate 1 will be described.

### Chemical Strengthening Conditions and Compressive Stress Layer

The glass plate 1 according to the present invention can be chemically strengthened by performing an ion exchange treatment in which the glass plate 1 that contains sodium is brought into contact with a molten salt that contains monovalent cations, preferably potassium ions, that have a larger ionic radius than sodium ions, and sodium ions in the glass plate 1 are replaced with the monovalent cations. A compressive stress layer in which compressive stress is applied is thus formed in the surface of the glass plate 1.

A typical example of the molten salt is potassium nitrate. Although a mixed molten salt of potassium nitrate and sodium nitrate may be used, a molten salt of potassium nitrate alone is preferable because it is difficult to control the concentration of the mixed molten salt.

The surface compressive stress and the depth of the compressive stress layer of a strengthened glass article can be controlled by adjusting not only the glass composition of the article but also the temperature of the molten salt during the ion exchange treatment and the treatment time.

A strengthened glass article with an extremely high surface compressive stress and an extremely deep depth of the compressive stress layer can be obtained by bringing the above-described glass plate 1 into contact with a potassium nitrate molten salt. Specifically, a strengthened glass article in which the surface compressive stress is 700 MPa or more and the depth of the compressive stress layer is 20 um or more can be obtained, and furthermore, a strengthened glass article in which the depth of the compressive stress layer is 20 um or more and the surface compressive stress is 750 MPa or more can be obtained as well.

It should be noted that, in the case where a glass plate 1 with a thickness of 3 mm or more is used, tempering with air quenching can be used as a common strengthening method, instead of chemical strengthening.

### 2. Functional Film

Next, the functional film 2 will be described with reference to FIG. 2. FIG. 2 is an enlarged cross-sectional view schematically showing a portion near a surface of a functional film. The functional film 2 contains an inorganic oxide that forms three-dimensional network bonds, inorganic oxide microparticles retained by the inorganic oxide, and antibacterial metal ions retained by the inorganic oxide. Their descriptions are given below.

### 2-1. Inorganic Oxide

The inorganic oxide has the function of a binder that retains the inorganic oxide microparticles and the metal ions. The inorganic oxide is preferably an inorganic oxide that contains for example a silicon oxide, which is an oxide of Si, and further preferably contains a silicon oxide as a main component. The inorganic oxide containing a silicon oxide as the main component is suitable for reducing the refractive index of the film and suppressing the reflectance of the film. The functional film may contain a component other than a silicon oxide, and may contain a component that partially contains a silicon oxide.

The component that partially contains a silicon oxide forms, for example, a three-dimensional network structure of siloxane bonds (Si-O-Si) in which silicon atoms and oxygen atoms are alternately linked to each other and spread three-dimensionally. Also, in this component, an atom other than a silicon atom and an oxygen atom, a functional group, or the like is bonded to the silicon or oxygen atom of a siloxane bond. Examples of the atom other than a silicon atom and an oxygen atom include a nitrogen atom, a carbon atom, a hydrogen atom, and elemental metals that will be described in the next paragraph. Examples of the functional group include organic groups that will be described as R in a paragraph below. This component is not a silicon oxide in a strict sense because it is not composed only of a silicon atom and an oxygen atom. However, in describing the characteristics of the functional film 2, treating a silicon oxide portion that is composed of a silicon atom and an oxygen atom as a "silicon oxide" is appropriate and is also consistent with usage in the field. In this specification, the silicon oxide portion is also treated as a silicon oxide. As is clear from the above description, the atomic ratio between silicon atoms and oxygen atoms in a silicon oxide need not be stoichiometric (1:2).

The functional film 2 can contain a metal oxide other than a silicon oxide, or specifically, a metal oxide component or a metal oxide portion that contains an element other than silicon. The metal oxide that can be contained in the functional film 2 is not particularly limited, but may be an oxide of at least one elemental metal selected from the group consisting of Al, Ti, Zr, Ta, Nb, Nd, La, Ce, and Sn, for example. The functional film 2 may contain an inorganic compound component other than an oxide, examples of which include a nitride, a carbide, and a halide, and may contain an organic compound component.

A metal oxide such as a silicon oxide can be formed from a hydrolyzable organic metal compound. An example of a hydrolyzable silicon compound is a compound represented by a formula (1):

RₙSiY₄₋ₙ (1)

where R is an organic group containing at least one selected from an alkyl group, a vinyl group, an epoxy group, a styryl group, a methacryloyl group, and an acryloyl group; Y is a hydrolyzable organic group that is at least one selected from an alkoxy group, an acetoxy group, an alkenyloxy group, and an amino group, or a halogen atom, which is preferably Cl; and n is an integer from 0 to 3 and is preferably 0 or 1.

R is preferably an alkyl group, for example, an alkyl group having 1 to 3 carbon atoms, and a methyl group is particularly preferable. Y is preferably an alkoxy group, for example, an alkoxy group having 1 to 4 carbon atoms, and a methoxy group and an ethoxy group are particularly preferable. Two or more compounds represented by the formula above may also be used in combination. As an example of this combination, a tetraalkoxysilane, where n is 0, and a monoalkyltrialkoxysilane, where n is 1, may be used together.

A preferred specific example of the silicon compound with a hydrolyzable group represented by the formula (I) is a silicon alkoxide in which X in the formula (I) is an alkoxy group. More preferably, the silicon alkoxide contains a tetrafunctional silicon alkoxide corresponding to a compound (SiX₄) of the formula (I) in which m = 0. Specific examples of the tetrafunctional silicon alkoxide include tetramethoxysilane and tetraethoxysilane. As the silicon alkoxide, one type of silicon alkoxide may be used alone, or two or more types may be used in combination, and when two or more types are used in combination, it is more preferable that the silicon alkoxide contains a tetrafunctional silicon alkoxide as a main component.

The compound represented by the formula (1), after hydrolysis and polycondensation, forms a network structure in which silicon atoms are bonded to one another via oxygen atoms. In this structure, the organic groups represented by R are contained in a state of being directly bonded to silicon atoms.

### 2-2. Inorganic Oxide Microparticles

The functional film 2 further contains inorganic oxide microparticles as at least a portion of the inorganic oxide. An inorganic oxide constituting the inorganic oxide microparticles is composed of the same element as the inorganic oxide that has been described in the section 2-1 above, and may be an oxide of at least one element selected from Si, Al, Ti, Zr, Ta, Nb, Nd, La, Ce, and Sn, for example, and preferably silica microparticles. The silica microparticles can be introduced into the functional film 2 by adding colloidal silica, for example. The inorganic oxide microparticles have an excellent effect of transferring stress that is applied to the functional film 2 to the glass plate 1, which supports the functional film 2, and also have high hardness. Therefore, the addition of the inorganic oxide microparticles is advantageous in order to improve the wear resistance of the functional film 2. The inorganic oxide microparticles can be supplied to the functional film 2 by adding previously formed inorganic oxide microparticles to a coating solution for forming the functional film 2.

If the inorganic oxide microparticles have an excessively large average particle size, the functional film 2 may become cloudy, and if the average particle size is excessively small, the inorganic oxide microparticles are likely to aggregate and thus difficult to disperse uniformly. In view of this, the average particle size of primary particles of the inorganic oxide microparticles is preferably 1 to 100 nm, and more preferably 5 to 50 nm. It should be noted that the average particle size of the inorganic oxide microparticles here refers to the average particle size thereof in primary particle form. Also, to determine the average particle size of the inorganic oxide microparticles, the particle size of arbitrarily selected 50 microparticles is measured through observation using a scanning electron microscope, and the average of the thus measured values is used as the average particle size. If the inorganic oxide microparticles are contained in a large amount, the functional film 2 may become cloudy. The inorganic oxide microparticles can be added in an amount of preferably 10 to 200 parts by weight, more preferably 20 to 180 parts by weight, even more preferably 5 to 25 parts by weight, and particularly preferably 50 to 160 parts by weight, with respect to 100 parts by weight of the inorganic oxide.

### 2-3. Metal Ions

The metal ions have antibacterial properties and can be formed of monovalent or divalent copper ions, silver ions, or the like. The metal ion content in the functional film 2 is preferably 2% to 50%, and more preferably 5% to 25%, in terms of mole ratio, with respect to the main component having the highest weight ratio, of the inorganic oxide that forms the network bonds.

### 2-4. Material Properties and Optical Properties of Functional Film

The thickness of the functional film 2 is, for example, preferably 50 nm or more and 500 nm or less, more preferably 100 nm or more and 450 nm or less, and particularly preferably 200 nm or more and 400 nm or less. If the functional film 2 is excessively thick, the functional film 2 may have a high haze ratio or may be excessively colored. On the other hand, if the functional film 2 is excessively thin, the inorganic oxide microparticles and the metal ions cannot be retained in the functional film 2 and may be detached therefrom. Furthermore, the functional film 2 may have poor durability.

The refractive index of the functional film 2 is preferably 1.3 to 1.48, and more preferably 1.35 to 1.45. As shown in FIG. 2, in the functional film 2 according to the present invention, protrusions and depressions are formed on the surface thereof as a result of aggregation of the inorganic oxide microparticles, which scatter light, and thus, the refractive index can be reduced. In particular, although the inorganic oxide microparticles themselves often have a refractive index of 1.4 to 1.55 for example, the apparent refractive index of the functional film 2 can be reduced because the functional film 2 has minute voids that are formed in sections where the inorganic oxide microparticles are in contact with each other or in close proximity to each other. The refractive index can be measured, for example, based on a method that conforms to JIS B-7071-1:2015.

The reflectance of the functional film 2 is preferably 3% or less, and more preferably 2% or less, at 550 nm. The reflectance can be measured, for example, based on JIS R-3106:2019.

The surface roughness Ra of the protrusions and depressions of the functional film 2 as measured using a laser microscope can be 0.03 to 0.3 um, and preferably 0.05 to 0.2 um, for example. This makes it possible to realize the above-described refractive index. The average particle size of primary particles of the inorganic oxide microparticles that are present on the surface of the functional film 2 is approximately 1 to 100 nm as described above, and is therefore characterized by being much smaller than the surface roughness of the protrusions and depressions. That is to say, the protrusions and depressions on the surface of the functional film 2 are not formed by inorganic oxide microparticles spherically aggregating, but by the surface of a layer of substantially uniformly depositing inorganic oxide microparticles becoming coarse and forming protrusions and depressions, as shown in FIG. 2. Such protrusions and depressions can be formed, for example, by controlling the dispersion and aggregation of inorganic oxide microparticles by appropriately preparing a coating solution for forming a functional film. It should be noted that FIG. 2 is a schematic representation of inorganic oxide microparticles, rather than an accurate representation. Furthermore, inorganic oxide microparticles are also deposited below the line A shown in FIG. 2, but only the microparticles above the line A are shown in order to illustrate mainly the surface characteristics of the functional film 2.

### 2-5. Method for Forming Functional Film

There is no particular limitation on the method for forming the functional film 2, and the functional film 2 can be formed in the following manner, for example. First, a material that constitutes the above-described three-dimensional network structure, for example, a silicon alkoxide such as tetraethoxysilane is dissolved to form a solution under an acidic condition, and thus, a precursor solution is produced. Furthermore, a solution containing the above-described antibacterial metal ions, such as an aqueous copper chloride solution, for example, and a dispersion containing inorganic oxide microparticles, such as colloidal silica, are mixed with the precursor. Thus, a coating solution for forming a functional film is produced.

Next, the coating solution is applied to the first surface of the glass plate 1 that has been washed. Although there is no particular limitation on the application method, flow coating, spray coating, spin coating, or the like can be used, for example. After that, the applied coating solution is dried at a predetermined temperature (e.g., 80°C to 200°C) in an oven or the like in order to, for example, volatilize the alcohol from the solution, and then sintered at a predetermined temperature (e.g., 200°C to 500°C) for the purpose of hydrolysis and organic chain decomposition, for example. Thus, a functional film 2 can be obtained.

### 3. Optical Properties of Cover Member

With regard to the optical properties of the cover member 10, for example, visible light transmittance is preferably 85% or more, and more preferably 90% or more. Also, the haze ratio of the cover member 10 is 20% or less, 15% or less, or particularly 10% or less, for example, or may be 0.1% to 8.0% or even 0.1% to 6.0% in certain cases.

Furthermore, the gloss can be evaluated based on the specular gloss. The 60° specular gloss of the cover member 10 is 90% to 140%, 95% to 140%, or particularly 100% to 140%, for example. These specular gloss values are measured on the surface where the functional film 2 is formed. It should be noted that, in general, a cover member that exhibits a gloss of 120% to 140% is used as a cover member for a display of an in-vehicle device such as a car navigation system.

It should be noted that the gloss can be measured in conformity with "Method 3 (Specular gloss at 60 degrees)" of "Specular glossiness-Methods of measurement" in JIS Z8741-1997, and the haze can be measured in conformity with JIS K7136:2000.

In addition, there are cases where it is undesirable if the color of the cover member 10 changes. For this reason, it is preferable that, in the L*a*b* color system, both a* and b* of the color tone of reflection from the semi-transmissive reflective film 2 are within ±2, more preferably within ±1.5, and particularly preferably within ±1. The values for a* and b* can be adjusted by changing the material and film thickness of the functional film 2 and the material and thickness of the glass plate 1. If a* and b* are within ±2, the color tone of a transmitted image can be seen correctly. Also, it is generally said that, if a* and b* are between -2.5 and +2.5, "colors within this range can be treated as the same color at the impression level". Furthermore, it is generally said that, if a* and b* are within ±2, a color difference between color tone levels within this range is hardly perceivable in a comparison between colors that are spaced apart from each other.

### 4. Features

The cover member 10 according to the present embodiment can provide an antireflection function, because the functional film 2 have protrusions and depressions formed by the inorganic oxide microparticles. Also, the cover member 10 can provide an antibacterial function as well, because the functional film 2 contains the antibacterial metal ions. Furthermore, the cover member 10 can be easily produced, because the antireflection function and the antibacterial function can be realized with a single functional film 2.

In addition, the above-described refractive index of the functional film 2 is comparable to those of fats and oils, and it is therefore possible to achieve an effect of making any fat or oil adhering to the functional film 2 unlikely to be seen. Furthermore, the protrusions and depressions formed on the surface of the functional film 2 have an effect of making it easy to wipe off any dirt, such as fats and oils, adhering to the surface of the functional film 2.

### Examples

Hereinafter, examples of the present invention will be described. However, the present invention is not limited to the examples below.

### (1) Preparation for Examples

First, 50 mm x 50 mm float glass plates with a thickness of 1.1 mm were prepared, and the surface of the glass plates was subjected to alkaline ultrasonic cleaning. Next, coating solutions for forming functional films were prepared with the following compositions.

**Table 1**

| | Total amount (g) | PGME (Propylene glycol monomethyl ether) (g) | PG (Propylene glycol) (g) | P-7 (g) | Purified water (g) | 600 Nitric acid (g) | CuCl₂·2H₂O (g) | B(OH)₃ (g) | Colloidal silica MEK-ST-UP (g) | Colloidal silica PGM-ST-UP (g) | Tetraethyl orthosilicate TEOS (g) | Silane coupling agent KBM-903 (g) | Surface conditioning agent KP-112 (g) |
|---|---|---|---|---|---|---|---|---|---|---|---|---|---|
| Ex. 1 | 18.0 | 9.3 | 2.7 | 1.4 | 0.0 | 0.0 | 0.6 | 2.2 | 0.6 | - | 0.9 | 0.3 | - |
| Ex. 2 | 400.0 | 275.6 | 60.0 | 30.0 | 2.3 | 2.0 | 4.5 | 3.3 | 13.4 | - | 6.9 | - | 2.0 |
| Ex. 3 | 400.0 | 275.6 | 60.0 | 30.0 | 2.3 | 2.0 | 4.5 | 3.3 | 13.4 | - | 6.9 | - | 2.0 |
| Ex. 4 | 400.0 | 275.6 | 60.0 | 30.0 | 2.3 | 2.0 | 4.5 | 3.3 | 13.4 | - | 6.9 | - | 2.0 |
| Ex. 5 | 300.0 | 203.4 | 45.0 | 22.5 | 1.7 | 1.5 | 3.4 | 2.5 | - | 13.3 | 5.2 | - | 1.5 |
| Ex. 6 | 200.0 | 143.9 | 30.0 | 15.0 | 0.6 | 1.0 | 1.4 | 1.0 | - | 4.0 | 2.1 | - | 1.0 |
| Ex. 7 | 200.0 | 143.9 | 30.0 | 15.0 | 0.6 | 1.0 | 1.4 | 1.0 | - | 4.0 | 2.1 | - | 1.0 |

- KBM-903 (manufactured by Shin-Etsu Silicone)
- KP-112 (manufactured by Shin-Etsu Silicone)
- MEK-ST-UP (organosilica sol manufactured by Nissan Chemical Corporation)
- PGM-ST-UP (organosilica sol manufactured by Nissan Chemical Corporation)

Subsequently, the coating solution of Example 1 was applied to the surface of the glass plate through flow coating, followed by heating in an oven at 180°C for 15 minutes and then at 300°C for 20 minutes. Also, the coating solutions of Examples 2 to 7 were applied to the surface of the respective glass plates through spray coating, followed by heating in an oven at and 300°C for 30 minutes. Thus, the cover members of Examples 1 to 7 were obtained.

### (2) Evaluation

The following tests were performed on the cover members of Examples 1 to 7. Table 2 shows the results.

### (2-1) Optical Properties

Haze, gloss, and transmittance were measured. The haze measurement was performed using a haze meter NDH 2000 manufactured by Nippon Denshoku Industries Co., Ltd. In this measurement, the functional film 2 was used as the plane of incidence, the haze ratio was measured at three locations on the specimen, and the average was used as the haze ratio. The gloss was measured in conformity with "Method 3 (Specular gloss at 60 degrees)" of "Specular glossiness-Methods of measurement" in JIS Z8741-1997. The transmittance was measured using a spectrophotometer U-4100 manufactured by Hitachi, Ltd.

### (2-2) Surface Hardness

The functional films were subjected to a surface pencil hardness test specified in JIS-K5600-5-1 (1999).

### (2-3) Elution Test

The cover members of Examples 1 to 7 were immersed in 25 ml of purified water at 25°C, and the relationship of the elution ratio of copper after 24 hours was calculated. This elution ratio was calculated as follows. First, a test water, which was treated with PACKTEST Copper (manufactured by Kyoritsu Chemical-Check Lab., Corp.) to develop color, was subjected to measurement, and the concentration of copper ions contained in the liquid was measured using DIGITALPACKTEST Copper (manufactured by Kyoritsu Chemical-Check Lab., Corp.). Then, the obtained concentration was converted to a ratio by weight to the copper originally contained in the film.

**Table 2**

| | Gloss (%) | Haze (%) | Transmittance (%) | Pencil hardness | Cu elution ratio (%) |
|---|---|---|---|---|---|
| Ex. 1 | 110.0 | 1.2 | 94.0 | - | 60 |
| Ex. 2 | 138.3 | 0.8 | 93.7 | 9H | 65 |
| Ex. 3 | 141.8 | 0.6 | 93.2 | 9H | 70 |
| Ex. 4 | 144.8 | 0.4 | 92.6 | 9H | 75 |
| Ex. 5 | 140.8 | 0.3 | 93.5 | 6H | 65 |
| Ex. 6 | 145.3 | 0.2 | 92.7 | 9H | 75 |
| Ex. 7 | 141.1 | 0.7 | 93.6 | 9H | 45 |

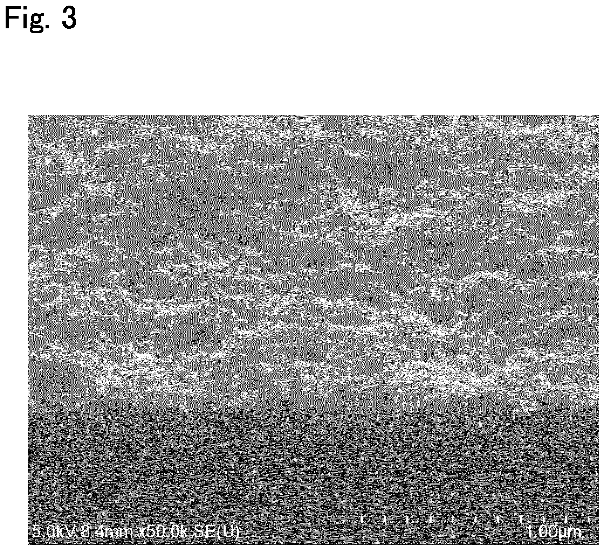

FIG. 3 is an SEM photograph of the surface of the functional film of Example 1. As shown in this photograph, it can be seen that protrusions and depressions were formed on the surface of the functional film by the inorganic oxide microparticles, and voids were formed within the protrusions and depressions. It should be noted that it was confirmed that similar protrusions and depressions were formed in Examples 2 to 7 as well.

The results shown in Table 2 indicate that the cover members of Examples 1 to 7 had sufficient transmittance, and it can thus be seen that these cover members exhibited an antireflection function. In addition, the inventor of the present invention confirmed that all the specimens in Table 2 exhibited an antibacterial activity against E. coli of 2.0 or more in an antibacterial test specified in JIS Z2801:2012. Therefore, it was found that the cover members of Examples 1 to 7 can provide sufficient antireflection and antibacterial functions with a single film.

### List of Reference Numerals

- 1: Glass plate
- 2: Functional film
- 10: Cover member
- 100: Member to be protected

## Claims

1. A cover member configured to cover an article while allowing the article to be externally seen therethrough, the cover member comprising:
a glass plate having a first surface and a second surface; and
a single functional film formed on the first surface,
wherein the functional film includes:
an inorganic oxide that forms three-dimensional network bonds;
inorganic oxide microparticles containing the same element as the inorganic oxide; and
antibacterial metal ions, and
protrusions and depressions are formed on a surface of the functional film by the inorganic oxide microparticles.

2. The cover member according to claim 1, wherein the functional film has a refractive index of 1.3 to 1.48.

3. The cover member according to claim 1 or 2, wherein the functional film has a reflectance of 3% or less at 550 nm.

4. The cover member according to any one of claims 1 to 3, wherein the functional film has a specular gloss of 90% to 140%.

5. The cover member according to any one of claims 1 to 4, wherein, in an L*a*b* color system, a* of a color tone of reflection from the functional film has a value of -2 to +2, and
in the L*a*b* color system, b* of the color tone of reflection from the functional film has a value of -2 to +2.

6. The cover member according to any one of claims 1 to 5, wherein the metal ions are copper ions.

7. The cover member according to any one of claims 1 to 6, wherein the functional layer has a film thickness of 50 to 500 nm.

8. A method for producing a cover member, the method comprising:
forming a coating solution in which inorganic microparticles and antibacterial metal ions are added to a silicon alkoxide;
applying the coating solution to a glass plate; and
heating the glass plate to which the coating solution has been applied.
